# EUROPEAN PATENT APPLICATION

(11) **EP 0 654 730 A1**
(43) Date of publication of application: **24.05.1995**
(21) Application number: 94420301.7
(22) Date of filing: 03.11.1994
(51) Int. Cl.: G06F 3/06

(54) **Method and apparatus for reprogramming the operation parameters of an optical data storage or retrieval system**

(30) Priority: 18.11.1993 US 154648
(71) Applicant: EASTMAN KODAK COMPANY, Rochester, New York 14650-2201 (US)
(72) Inventor: Kruse, Mark W., c/o Eastman Kodak Company, Rochester, New York 14650-2201 (US)
(74) Representative: Boulard, Denis

(57) **Abstract**

An optical data storage or retrieval system, comprising: (a) an optical reading unit; (b) an electronically erasable programmable read only memory having stored therein a first set of parameters for controlling the operation of the reading unit; (c) a reprogramming optical disk having stored thereon a second set of parameters for controlling the operation of the reading unit, the second set of parameters being readable by the reading unit; (d) a temporary storage unit for temporarily storing the second set of parameters as it is read by the reading unit; (e) an erasing/writing unit for electronically erasing the first set of parameters in the memory; and(f) an arrangement for reading the second set of parameters from the temporary storing means and for electronically reprogramming the memory with the second set of parameters to replace the first set of parameters.

## Description

### Field of the Invention

The invention relates to optical data storage or retrieval systems and more particularly to a method and an apparatus for reprogramming the operation parameters of such systems.

### BACKGROUND OF THE INVENTION

When an optical disk reader or writer such as a High Speed CD writer is powered up, the hardware is controlled by a CPU running firmware stored in Electronically Erasable Programmable Read Only Memories (EEPROM). The firmware comprises a series of parameters for controlling the operation of the reader/writer. Some of these parameters are related to the mechanics of the writer (spindle motor, drawer motor, access system, etc.), some others are related to the electronics (laser powers, encoder/decoder chips, buffers, etc.). The firmware may also handle communications with host computers via communication protocols, such as SCCI, RS-232C, and parallel ports.

Whenever the firmware needs to be upgraded with new algorithms (which will be referred to in the following description as parameters), the existing EEPROMs must be physically extracted from sockets on the electronics board in the writer and replaced with the new EEPROMs which have previously been programmed on a separate EEPROM recording device. Every time that the EEPROMs must be replaced (which could be frequent depending on how often new versions of code are released), a technician must remove the covers of the writer, extract the old EEPROMs, plug in the new ones, and then replace the covers. This is a time consuming task, and every time that it is done there is a risk of electrostatic discharge damage to the EEPROM sockets or to the EEPROMs themselves, incorrect installation of the EEPROMs (placed in the wrong socket or in the wrong orientation), etc. This also requires that a qualified technician must go to the physical location of the writer/reader to perform this operation.

Flash EEPROMs, i.e. EEPROMs which can be reprogrammed without removing them from their sockets, have been used in electronic devices to simplify this operation, a host computer being used to download the new parameters to the Flash EEPROMs via some communication protocols such as RS-232C or SCSI. Such a system is described in U.S. Patent No. 4,794,558 issued December 27, 1988 to R. R. Thompson and U.S Patent No. 4,791,661 issued December 13, 1988 to Donaldson et al. However, this still requires that a host computer be present (or that one be brought to the location). The host computer should contain the proper software to control the reprogram operation. It also requires that the technician upgrading the Flash EEPROMs has access to that host computer. None of these requirements can be guaranteed at all sites where an optical writer/reader may be installed. All of these operations can add up to a very significant cost which may include shipping new EEPROMs to the site of the writer, sending a qualified technician to that location, risk of electrostatic discharge damage to the writer/reader to be upgraded, and the actual time spent to perform the upgrade.

In CD-I systems, software from CD-I optical disks are read by the reader and are then used to control the operation of the reader. The parameters read off of these CD-I optical disks are of temporary nature, are not stored permanently in the memory of the system, and control always falls back to the original parameters stored in PROMs. The above mentioned problems are of no relevance for such a system.

U.S. Patent No 5,210,854 issued May 11, 1993 to Beaverton et al describes a system for updating program stored in EEPROM by storing new version into new location and updating second transfer vector to contain starting address of new version. One of the drawbacks of such a system lies in the fact that new parameters are stored in a location different from the location of the first set of parameters. Accordingly, the first set of parameters has not to be erased prior to the recording of the new set of parameters. Unfortunately, such a solution requires a great amount of memory in EEPROM.

Commonly-assigned U.S. Patent No. 5,241,659 issued August 31, 1993 to Parulski et al describes a system in which user-sourced image customizing parameters are stored in a removable module EEPROM. Such parameters are input to the system by way of a conventional hand-held remote control. Such parameters include, the contrast, image magnification, color balance, saturation, border type and border location. Obviously, such a method could not be used for updating the working parameters of the system for which 1 MB of memory would be necessary to store them. In other words, the system described by Parulski et al works only for the transmission of a limited number of parameters.

### SUMMARY OF THE INVENTION

Accordingly, it is one of the objects of the present invention to provide a method and apparatus for reprogramming the operation parameters in an optical data storage or retrieval system that eliminates the problems mentioned in the above discussion with respect to conventional techniques.

These objects are achieved by providing an optical data storage or retrieval system, comprising:
(a) an optical reading unit;
(b) an electronically erasable programmable read only memory having stored therein a first set of parameters for controlling the operation of the reading unit;
(c) a reprogramming optical disk having stored thereon a second set of parameters for controlling the operation of the reading unit, the second set of parameters being readable by the reading unit;
(d) temporary storing means for temporarily storing the second set of parameters as it is read by the reading unit;
(e) means for electronically erasing the first set of parameters in the memory; and
(f) means for reading the second set of parameters from the temporary storing means and for electronically reprogramming the memory with the second set of parameters to replace the first set of parameters.

It is also another object of the invention to provide, in an optical data storage or retrieval unit including an optical reading unit, electronically erasable programmable read only memory having stored therein a first set of parameters for controlling the operation of the optical reading unit, erasing/recording means for erasing/recording the memory, and temporary storage means, a method for replacing the first set of parameters in the memory by a second set of parameters for controlling the operation of the optical reading unit, the method comprising the steps of:
(a) providing an optical disk readable by the optical reading unit with the second set of parameters;
(b) reading the second set of parameters on the optical disk and storing the second set of parameters in the temporary storage means;
(c) erasing the first set of parameters in the memory; and
(d) transferring the second set of parameters from the temporary storage means to the memory in order to reprogram the memory.

It is still another object of the invention to provide, in an optical data storage or retrieval system including an optical reading unit, electronically erasable programmable read only memory having stored therein a first set of parameters for controlling the operation of the optical reading unit, and means for erasing/recording the memory, an optical storage medium having stored thereon digital information, comprising a second set of parameters for controlling the operation of the optical reading unit, the second set of parameters being readable by the optical reading unit to be recorded in the memory to replace the first set of parameters.

These and other objects of the present invention will become more apparent when taken in conjunction with the following description and drawings wherein like characters indicate like parts and which drawings form a part of the present description.

The following are advantages of the invention: The optical data storage or retrieval system reads new parameters from its own media and updates its parameters all without intervention from outside; costs are lowered due to the fact that a qualified technician is not required to travel to the physical location of the machine; it is merely necessary to mail a reprogramming optical disk to the location and have somebody insert the disk into the machine; the machine does the rest.

### BRIEF DESCRIPTION OF THE DRAWINGS

Fig. 1 is a block diagram of a preferred embodiment of the optical data storage or retrieval unit of the invention;
Fig. 2 is a block diagram illustrating methods used to produce the reprogramming optical disk of the invention; and
Fig. 3 is a flow chart illustrating the different steps of the method of the invention.

### DETAILED DESCRIPTION OF THE PREFERRED EMBODIMENTS

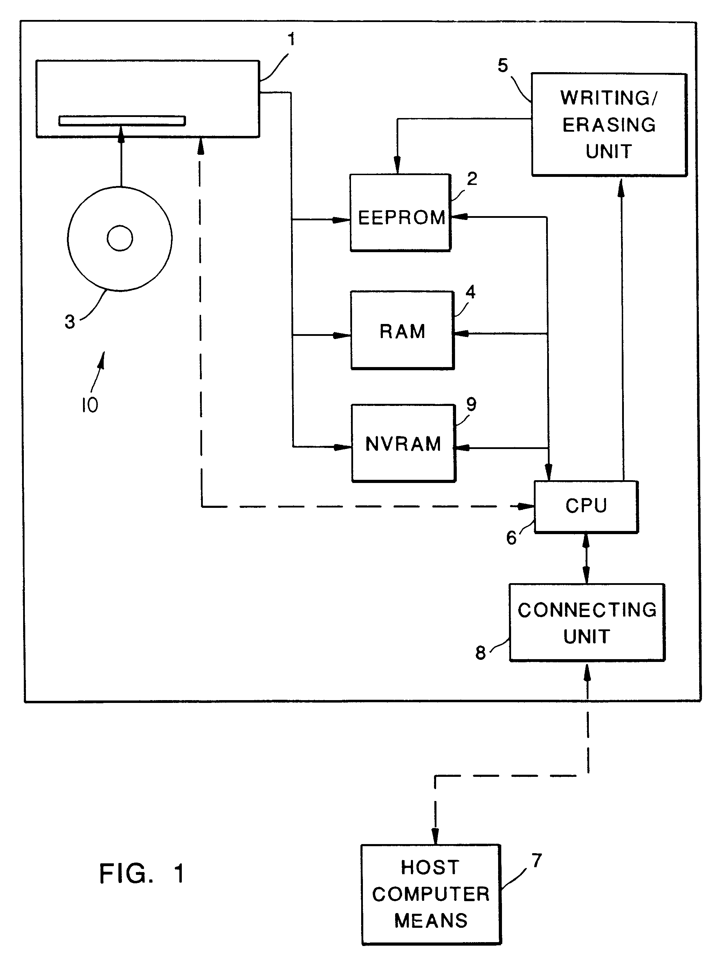

Fig. 1 to which it is now made reference shows a block diagram of an optical data storage and/or retrieval system 10 according to the invention. Such a system mainly comprises an optical reader/writer, such as a CD writer/reader for reading/writing on appropriate optical storage mediums 3. When powered up, the system is controlled by a CPU unit 6 which runs firmwares (parameters) stored in Electronically Erasable Programmable Read Only Memories 2 which may in turn use other parameters stored in Non-Volatile Random Access Memory (NVRAM) 9. Such a NVRAM can be used to store calibration parameters or parameters used for controlling the capabilities and functionalities of the writer/reader. Also shown is a Random Access Memory (RAM) 4 which is used by the CPU 6 during the execution of different operation programs of the system and which is also used for temporarily storing a new set of parameters to replace the existing one in the EEPROMS. This will be described hereafter in more detail. Typically the flash EEPROM 2 is comprised of two different parts: a protected section known as a "bootstrap" and an erasable "program" section. The protected section contains routines which are used by the CPU when powering up the system. It is also used to control the operation of the writing/erasing unit 5 of the EEPROM as well as to execute safety procedures by using host computer means 7 through a connecting unit 8 (which will be discussed later in more detail). Such a portion of the EEPROM is protected so that it cannot be erased by the writing/erasing unit 5. The program section of the flash EEPROM contains parameters used by the CPU to control the operation of the optical writing/reading unit 1. Such a program section can be erased and reprogrammed by the erasing/writing unit 5 when it is necessary to change the operation parameters stored therein.

According to the invention, when it is necessary to change the parameters stored in the EEPROMs of the system, the new parameters are provided to the system on a reprogramming optical disk 3 readable by said optical reading unit. Preferably, such a reprogramming optical disk contains some ID information in order to allow the system to recognize it as such. For example, such an ID information can be stored in an index field of the program management area of the optical disk. Also stored in the index field of the optical disk could be the location where the new parameters are stored.

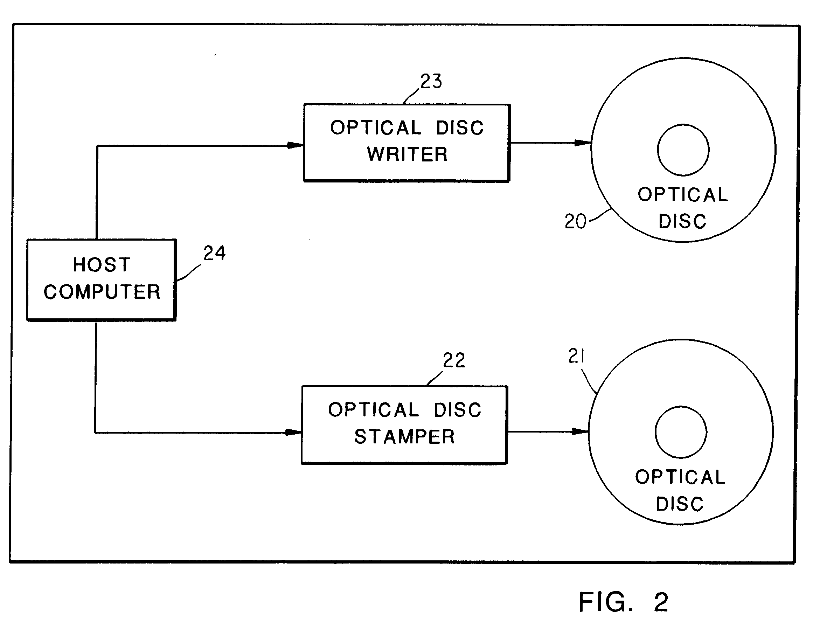

Fig. 2 illustrates two methods which can be used to produce such a reprogramming optical disk. The reprogramming optical disk 20 is produced by an optical disk writer 23 controlled by computer means 24. As an alternative, the optical disk 21 is produced by using an optical disk stamper 22 also controlled by computer means 24. Such methods do not form the object of the invention and, accordingly do not need any further detailed description. Such methods have been widely disclosed in the patent literature.

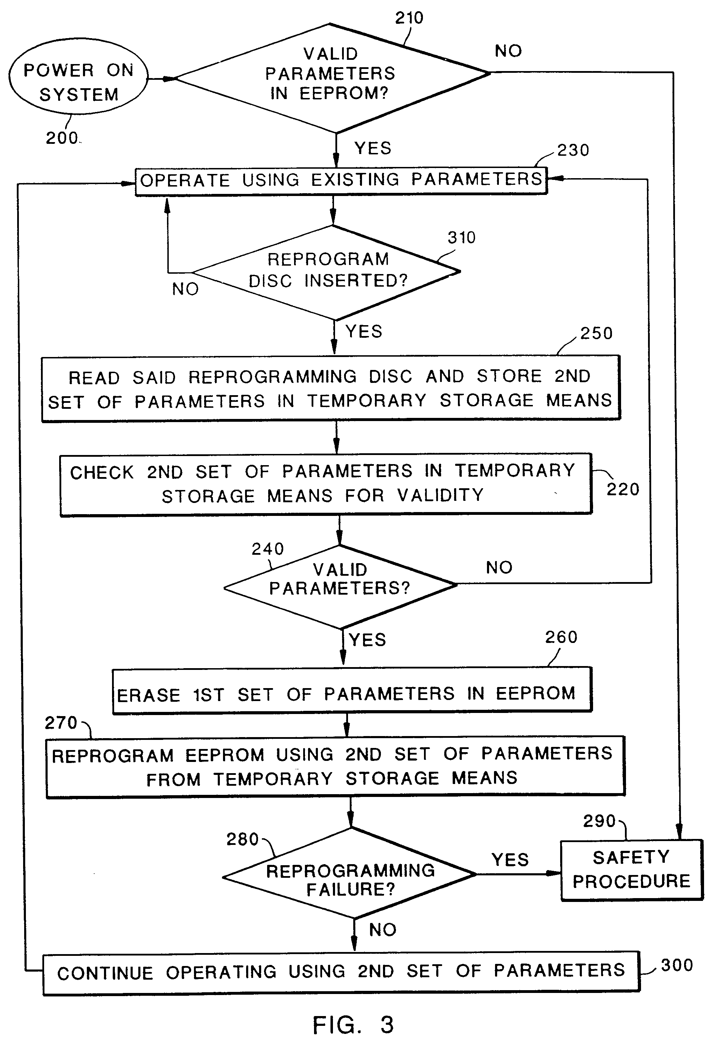

Fig. 3 to which it is now made reference represents a flow chart of a preferred embodiment of the method according to the invention. According to this preferred embodiment, when the system is powered on (200), the CPU 6 initiates a first reading and checking (210) of the parameters stored in the EEPROMs 2. If an invalid set of parameters is detected in the EEPROMs, a safety procedure (290) is initiated to download the new parameters from a host computer 7 into the EEPROMs, through the connecting unit 8 and the temporary storage means 4, to allow the optical writing/reading unit to start. This safety procedure will be described later in more detail.

An optical disk inserted in the reading unit is then read. The ID unit of the optical disk is checked (310). If it is identified as a reprogramming optical disk (by the ID stored in the index field), the reader/writer will read (250) a block of data from the location specified in the special optical disk ID and store it temporarily in memory 4. This block of memory should be large enough to contain all of the new parameters to be reprogrammed into the reader/writer. According to a preferred embodiment the CPU check (240) the validity of the parameters transferred in the temporary storage means 4. If an invalid set of parameters is detected, the system continues to operate by using the original set of parameters stored in the EEPROMs (230).If a valid set of parameters is detected, the reader/writer firmware execution jumps to a protected section of firmware and erases the EEPROM/RAM/NVRAM locations to be reprogrammed (260). The new parameters are then transferred and stored from the temporary storage means 4 to the erased areas (270). Parameters to be stored in the EEPROM's are electronically recorded by means of the erasing/writing unit 5. At this point, the reader/writer parameters have been updated and the reader/writer can start executing with the new parameters now controlling actual operations of the system.

According to a preferred embodiment, a reprogramming failure routine is used to detect any possible reprogramming failure. To this end, the content of the EEPROM's (the locations at which the new set of parameters is supposed to be) is checked (280). If no reprogramming failure is detected, the reader/writer start operating with the new set of parameters (300). If a reprogramming failure is detected, a safety routine (290) is executed. According to this safety routine, the reader/writer firmware execution jumps to a protected section of firmware and controls the downloading of the new set of parameters from host computer means 7 through a connecting unit. Advantageously, RS-232C or SCSI communication protocols are used to control the transfer from the host computer to the system. The downloaded parameters are then recorded in the EEPROMs.

Advantageously, it may also be important that accidental reprogramming of the reader/writer not take place. This can be avoided by requiring some outside intervention before the reprogramming is allowed to take place. According to a preferred embodiment, once the reader recognizes an optical disk as a reprogramming optical disk, it starts to flash externally visible LEDs in a unique identifiable pattern. This flashing is continued for a given period of time. During this period of time, an operator must press a button (for example, the eject button) a given number of times. If the button is not pressed or is pressed a number of times different from the given number during this period of time, the writer/reader will treat the reprogramming optical disk as an ordinary optical disk and complete the start drive without updating any parameters. This would prevent an accidental erasing of the parameters if someone places a reprogram optical disk into the writer/reader when a regular optical disk was intended to be inserted for regular reading or writing purposes.

Advantageously, parameters stored in the NVRAM can be reprogrammed by using the same procedure as the one described with respect to the EEPROMs.

### PARTS LIST

- 1: optical writing/reading unit
- 2: EEPROM
- 3: reprogramming optical disk
- 3: storage medium
- 4: temporary storage means
- 4: RAM
- 5: writing/erasing unit
- 6: CPU unit
- 7: host computer means
- 8: connecting unit
- 9: NVRAM
- 10: optical data storage and/or retrieval system
- 20: reprogramming optical disk
- 21: optical disk
- 22: optical disk stamper
- 23: optical disk writer
- 24: computer means

## Claims

1. An optical data storage or retrieval system, comprising:
(a) an optical reading unit;
(b) an electronically erasable programmable read only memory having stored therein a first set of parameters for controlling the operation of said reading unit;
(c) a reprogramming optical disk having stored thereon a second set of parameters for controlling the operation of said reading unit, said second set of parameters being readable by said reading unit;
(d) temporary storage means for temporarily storing said second set of parameters as it is read by said reading unit;
(e) means for electronically erasing said first set of parameters in said memory; and
(f) means for reading said second set of parameters from said temporary storage means and for electronically reprogramming said memory with said second set of parameters to replace said first set of parameters.

2. An optical data storage or retrieval system according to claim 1 further comprising an optical writing unit, said first and second set of parameters also controlling the operation of said optical writing unit.

3. An optical data storage or retrieval unit according to claim 1 further comprising:
(g) means for, after recording said second set of parameters in said memory, checking the validity of said second set of parameters as recorded in said memory in order to detect a possible reprogramming defect of said memory;
(h) host computer means having stored therein said second set of parameters;
(i) coupling means for coupling said host computer to said system; and
(j) means for, in the event of a reprogramming defect of said memory, downloading from said host computer means said second set of parameters in said temporary storage means, through said coupling means.

4. An optical data storage or retrieval system according to claim 1 further comprising means for generating an authorization signal for initiating the reprogramming process of said memory.

5. An optical data storage or retrieval system according to claim 4 wherein said authorization signal is stored as an ID code on said reprogramming optical disk and is read by said reading unit to initiate the reprogramming process of said memory.

6. In an optical data storage or retrieval unit including an optical reading unit, electronically erasable programmable read only memory having stored therein a first set of parameters for controlling the operation of said optical reading unit, erasing/recording means for erasing/recording said memory, and temporary storage means, a method for replacing said first set of parameters in said memory by a second set of parameters for controlling the operation of said optical reading unit, said method comprising the steps of:
(a) providing an optical disk readable by said optical recording unit with said second set of parameters;
(b) reading said second set of parameters on said optical disk and storing said second set of parameters in said temporary storage means;
(c) erasing said first set of parameters in said memory; and
(d) transferring said second set of parameters from said temporary storage means to said memory in order to reprogram said memory.

7. A method according to claim 8 further comprising the steps of:
(e) checking the validity of the second set of parameters as stored in said memory in order to detect a possible reprogramming defect of said memory;
(f) coupling said system to host computer means having stored therein said second set of parameters; and
(g) in case of a reprogramming defect of said memory, downloading said second set of parameters from said host computer means into said temporary storage means; and
(h) transferring said second set of parameters from said temporary storage means to said memory.

8. A method according to claim 6 further comprising the step of checking the validity of the second set of parameters as stored in said temporary storage means.

9. A method according to claim 6 further including the step of generating an authorization signal prior to read and store said second set of parameters in said temporary storage means.

10. A method according to claim 9 wherein said authorization signal is stored on said optical recording disk as an ID and generated by the reading of said optical disk.

11. A method according to claim 9 wherein said authorization signal is generated by an operator.

12. In an optical data storage or retrieval system including an optical reading unit, electronically erasable programmable read only memory having stored therein a first set of parameters for controlling the operation of said optical reading unit, and means for erasing/recording said memory, an optical storage medium having stored thereon digital information, comprising a second set of parameters stored on said optical storage medium for controlling the operation of said optical reading unit, said second set of parameters being readable by said optical reading unit to be recorded in said memory to replace said first set of parameters.
